# EUROPÄISCHE PATENTSCHRIFT

(11) **EP 0 816 127 B1**
(45) Veröffentlichungstag und Bekanntmachung des Hinweises auf die Patenterteilung: **07.11.2001**
(21) Anmeldenummer: 97107651.8
(22) Anmeldetag: 09.05.1997
(51) Int. Cl.: B60B 27/00

(54) **Radlagerung einer angetriebenen Achse mit einem hohlen, die Radlasten aufnehmenden Achskörper**
Wheel bearing of a drive axle with a hollow axle body for the wheel load
Palier de roue d'un essieu moteur avec un corps d'essieu creux pour la charge des roues

(30) Priorität: 25.06.1996 DE 19625343
(43) Veröffentlichungstag der Anmeldung: 07.01.1998
(73) Patentinhaber: DaimlerChrysler AG, 70567 Stuttgart (DE)
(72) Erfinder: Boese, Wolfgang, 73776 Altbach (DE); Hämmerle, Gerhard, 71364 Winnenden (DE); Noll, Lothar, 71336 Waiblingen (DE)

(56) Entgegenhaltungen:
- EP-A- 0 418 532
- WO-A-95/13198
- US-A- 4 792 020

## Beschreibung

Die Erfindung betrifft eine Radlagerung einer angetriebenen Achse mit einem hohlen, die Radlasten aufnehmenden Achskörper, auf dessen jeweiligem äußeren Ende axial fixiert mindestens ein Wälzlager sitzt, das eine Radnabe mit zumindest einer Bremsscheibe oder -trommel trägt, an der ein Antriebswellenflansch einer aus dem jeweiligen äußeren Ende des hohlen Achskörpers herausragenden Antriebswelle angeflanscht ist.

Aus der WO 95/13 198 ist eine derartige Radlagerung bekannt. Bei dieser Radlagerung ist die Radnabe mittels eines zweireihigen Kegelrollenlagers auf dem Achskörper gelagert. Der Außenring des Kegelrollenlagers verfügt über einen sich radial erstreckenden Flansch, an dem von der Radaußenseite her hintereinander eine Bremsscheibe und die Radnabe verschraubt sind.

Diese Lösung hat u.a. folgende Nachteile: Sie erfordert ein Sonderlager mit Flansch. Dieser Flansch, der kostenintensiv aus Wälzlagerstahl hergestellt ist, bedingt wegen der Krafteinleitung in den Außenring einen großen Innendurchmesser für die Radnabe und den Bremsflansch. Durch die Anordnung des lagereigenen Flansches am Außenring ist eine mittige Radlasteinleitung nicht möglich. Außerdem wird die Abwärme der Bremsscheibe direkt und großflächig in den Außenring geleitet, wodurch sich das Lagerspiel und der dortige Schmiermittelverbrauch erhöht.

Der Erfindung liegt daher das Problem zugrunde, eine Radlagerung zu schaffen, die, bei der Verwendung eines flanschfreien Wälzlagers zur axialen Fixierung weder an der Radnabe, noch an daran angeflanschten Bremsenbauteilen oder dem ebenfalls angeflanschten Antriebswellenflansch separat zu bearbeitende Anlage- oder Stützschultern benötigt. Es sollen keine anderen axialen Sicherungsmittel wie z.B. Sicherungsringe, Muttern und Distanzringe verwendet werden. Ferner soll die Radlagerung bezüglich der Breite und des Durchmessers einen geringen Bauraum ermöglichen. Eine einfache Montage ist ebenfalls erwünscht. Auch sollen die aus dem Bereich des zitierten Standes der Technik bekannten Nachteile vermieden werden.

Das Problem wird mit den Merkmalen des Hauptanspruchs gelöst. Die Radnabe und der in ihrer zentralen Bohrung eingesetzte Wälzlageraußenring sind zwischen den flanschseitigen, planen Stirnflächen eines Bremsenbauteils und des Antriebswellenflansches eingespannt. Da die Radnabe im Flanschbereich dieser beiden Bauteile dem Breitenmaß des Wälzlageraußenringes - zuzüglich einer Fertigungstoleranz entspricht, bilden die Stirnflächen des Bremsenbauteils und des Antriebswellenflansches die axialen Anschläge.

Die in den beidseits der Radnabe aneinanderstoßenden Stirnflächen werden als plane Hüllflächen bezeichnet, da die Stirnflächen u.a. zur Verringerung der spanabhebenden Bearbeitung, zur Minimierung der Wärmeübertragung, zur Abfuhr von Schmiermittelleckage u.s.w. oft mehrere verschiedene Ausnehmungen aufweisen.

Die erfindungsgemäße Radlagerung ermöglicht eine montagefreundliche, kompaktbauende und kurze Radnabe trotz der üblichen Wälzlagergröße für Kompaktlager. Die Verkürzung der Radnabe bedingt auch eine kürzere Antriebswelle. Folglich wird bei gleichbleibender Tragfähigkeit der Achse die Massenträgheit der rotierenden Treibrad- und achsseitigen Antriebsteile verkleinert. Damit verbessert sich außerdem die Fahrdynamik.

Weitere Einzelheiten der Erfindung ergeben sich aus den Unteransprüchen und der nachfolgenden Beschreibung einer schematisch dargestellten Ausführungsform:

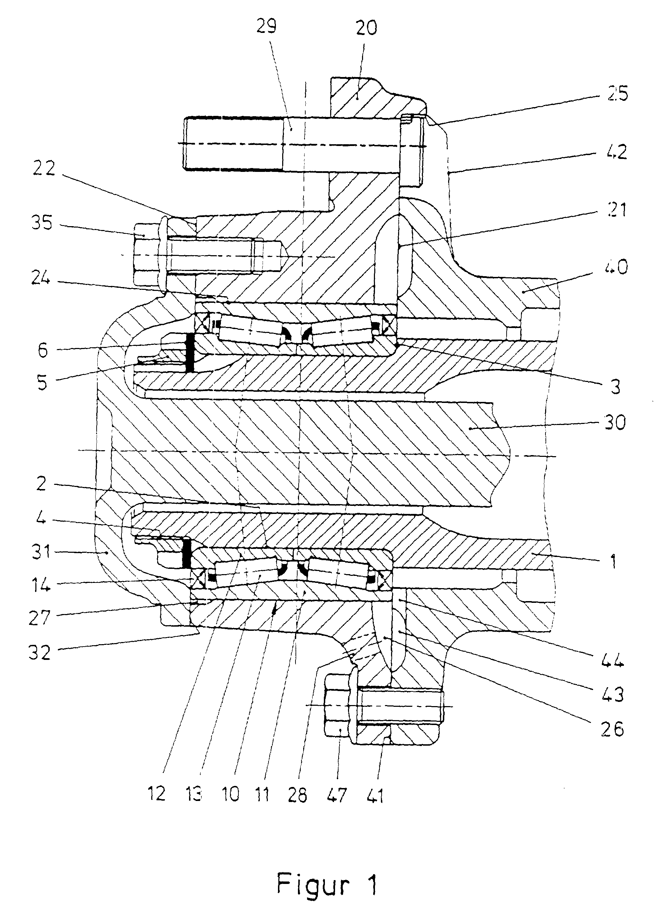

- Figur 1:: Radlagerung mit doppelreihigem Kegelrollenlager im Längsschnitt.

Figur 1 zeigt eine Radlagerung einer sog. "full-floating"-Antriebsachse. Bei diesem Starrachsentyp ist das einzelne Treibrad über ein Wälzlager (10) auf einem am Fahrzeugaufbau in der Regel federnd abgestützten Achskörper (1) so gelagert, daß die das Treibrad antreibende Welle (30) nur durch das von ihr übertragene Antriebsmoment belastet wird.

Im Ausführungsbeispiel endet der sich nach außen verjüngende, hohle Achskörper (1), der auch Teil einer lenkbaren Achse sein kann, in einem Lagersitz (2). Letzterer ist zum einen zur Fahrzeugmitte hin durch eine Achskörperschulter (3) und zum anderen zur Radaußenseite hin durch ein Gewinde (4) begrenzt. Auf dem Lagersitz (2) sind zwei Innenringe (12) eines in 0-Anordnung montierten Kegelrollenlagers (10) angeordnet. Die Innenringe (12) werden mit Hilfe einer sicherbaren Wellenmutter (5) über eine verdrehsichere Stützscheibe (6) gegen die Achskörperschulter (3) verspannt.

Die Radnabe (20) stützt sich über einen Wälzlageraußenring (11) mit zylindrischer Außenkontur und die Wälzkörper (13) auf den Innenringen (12) ab. Die Stirnseiten des Kegelrollenlagers (10) sind über zwei Lagerdichtringe (14) abgedichtet.

Auf der zur Fahrzeugmitte hin ausgerichteten Innenseite der Radnabe (20) ist der Flansch (40) einer Bremsscheibe mit Hilfe von Schrauben (47) befestigt. Im Bereich der Montagefuge (21, 41) zwischen dem Bremsscheibenflansch (40) und der Radnabe (20) haben beide Bauteile eine plane Hüllfläche, die quer zur Rotationsachse der Radnabe (20) orientiert ist.

Am oberen Rand der Radnabe (20) ist einer von mehreren Radbefestigungsbolzen (29) gezeigt. Die Köpfe der einzelnen Bolzen (29) liegen ebenfalls an der planen Hüllfläche der Radnabe (20) an. Im Bereich der Köpfe ist der Bremsscheiberflansch (40) ausgespart, vgl. die strichpunktierte Kontur (42) des Bremsscheibenflansches (40). Am oberen Rand dieser Kontur ist ein Radnabenbund (25) für die radiale Zentrierung des Bremsscheibenflansches (40) zu erkennen.

Auf den in der Radnabe (20) verdrehsicher eingepreßten Radbefestigungsbolzen (29) wird mindestens eine der nicht daigestellten Felgen montiert.

Der Innendurchmesser des Bremsscheibenflansches (40) ist kleiner als der Innendurchmesser der Radnabenbohrung (24), so daß der Bremsscheibenflansch (40) als axialer Anschlag für den Auβenring (11) des Kegelrollenlagers (10) geeignet ist.

Die Radnabe (20) weist im Bereich der inneren Montagefuge (21, 41) eine flächenhafte Ausnehmung (26) auf. Gegenüber befindet sich im Bremsscheibenflansch (40) ebenfalls eine Ausnehmung (43). Letztere ist in ihrem unteren Bereich über einen Kanal (44) mit dem Hohlraum zwischen dem Achskörper (1) und dem Bremsscheibenflansch (40) verbunden. Die Ausnehmung (26) mündet im unteren Bereich der Radnabe (20) oberhalb der Schraube (47) über eine gestrichelt dargestellte Bohrung (28) ins Freie, um gegebenenfalls austretendes Leckageöl von den Bremsbelägen fernzuhalten.

Auf der Außenseite der Radnabe (20) ist die im hohlen Achskörper (1) angeordnete Antriebswelle (30) über ihren angeformten Antriebswellenflansch (31) drehstarr mittels einer Schraubenverbindung befestigt. Von letzterer ist eine Schraube (35) dargestellt. Auch hier ist die Radnabe (20) und der Antriebswellenflansch (31) im Bereich der äußeren Montagefuge (22, 32) quer zur Rotationsachse vollständig plan ausgeführt. Da der Innendurchmesser der Planfläche des Antriebswellenflansches (31) ungefähr so groß ist wie der äußere Innendurchmesser des Wälzlageraußenrings (11), bildet der Antriebswellenflansch (31) ebenfalls einen axialen Anschlag für den Wälzlageraußenring (11).

Die Radnabe (20) hat am äußeren Rand ihrer Radnabenbohrung (24) einen ringförmigen Kanal (27), dessen Tiefenausdehnung wie auch bei der Ausnehmung (26) vor dem Tragbereich des Wälzlageraußenringes (11) endet. Durch die beiden Ausnehmungen (26) und (27) wird die zu bearbeitende Lagersitzfläche auf das notwendige Maß beschränkt.

Für die Montage der Radlagerung wird zunächst die Radnabe (20) mit der Bremsscheibe bzw. deren Flansch (40) verschraubt. Anschließend wird das Kegelrollenlager (10) in die Radnabenbohrung (24) bis zum Anschlagen an dem Bremsscheibenflansch (40) eingepreßt. Die be:.den äußeren Stirnseiten von der Radnabe (20) und dem Kegelrollenlager (10) schließen annähernd bündig ab. Durch entsprechende Toleranzen der Breite des Außenrings (11) und der Radnabe (20) ist gewährleistet, daβ der Außenring (11) des Kegelrollenlagers (10) nicht über die plane Hüllfläche (22) der Radnabe (20) hinausstehen kann. Als maximales Axialspiel des Kegelrollenlagers (10) sind beispielsweise 150 µm vorgesehen.

Der Verbund aus der Radnabe (20), der Bremsscheibe und dem Kegelrollenlager (10) wird nun über den Achskörper (1) geschoben und nach dem Unterlegen der Stützscheibe (6) mit der Wellenmutter (5) befestigt und gesichert. Abschließend wird die Antriebswelle (30) in den Achskörper (1) geschoben und der Antriebswellenflansch (31) an der Radnabe (20) verschraubt.

### Bezugszeichenliste

- 1: Achskörper, hohl
- 2: Lagersitz
- 3: Achskörperschulter
- 4: Gewinde
- 5: Wellenmutter, sicherbar
- 6: Stützscheibe

- 10: Wälzlager, Kegelrollenlager, zweireihig
- 11: Außenring
- 12: Innenringe
- 13: Wälzkörper
- 14: Lagerdichtringe

- 20: Radnabe
- 21: innere Hüllfläche, Außenseite Teil der äußeren Montagefuge
- 22: äußere Hüllfläche, Teil der inneren Montagefuge

- 24: Radnabenbohrung
- 25: Radnabenbund
- 26: Ausnehmung, innen
- 27: Ringkanal, Ausnehmung, außen
- 28: Bohrung
- 29: Radbefestigungsbolzen

- 30: Antriebswelle
- 31: Antriebswellenflansch
- 32: Hüllfläche, plan, Teil der äußeren Montagefuge

- 35: Schraube

- 40: Bremsscheibenflansch
- 41: Hüllfläche, plan,
Teil der inneren Montagefuge
- 42: Kontur, strichpunktiert
- 43: Ausnehmung
- 44: Kanal

- 47: Schraube

## Patentansprüche

1. Radlagerung einer angetriebenen Achse mit einem hohlen, die Radlasten aufnehmenden Achskörper (1), auf dessen jeweiliger äußeren Ende axial fixiert mindestens ein Wälzlager (10) sitzt, das eine Radnabe (20) mit zumindest einer Bremsscheibe oder -trormel trägt, an der ein Antriebswellenflansch (31) einer aus dem jeweiligen äußeren Ende des hohlen Achskörpers (1) nerausragenden Antriebswelle (30) angeflanscht ist,
**dadurch gekennzeichnet,**
- **daß** die Radnabe (20) in der näheren Umgebung des Wälzlagers (10) annähernd der Breite des Wälzlageraußenrings (11) entspricht und
- **daß** an der Außenseite der Radnabe (20) der Antriebswellenflansch (31) und an der Innenseite der Radnabe (20) ein Flansch (40) der Bremsscheibe oder -trommel mit jeweils einer planen Hüllfläche (32, 41) zumindest kraftschlüssig anliegen, wobei die beiden Hüllflächen (32, 41) in radialer Richtung in den Bereich des Wälzlageraußenrings (11) hineinragen und dort als axiale Anschlagflächen für den entsprechenden Außenring (11) dienen.

2. Radlagerung gemäß Anspruch 1, **dadurch gekennzeichnet, daß** auf der planen, inneren Hüllfläche (21) der Radnabe (20) die Köpfe der Radbefestigungsbolzen (29) aufliegen.

3. Radlagerung gemäß Anspruch 1, **dadurch gekennzeichnet, daß** der Flansch (40) der Bremsscheibe oder -trommel an den Stellen, an denen in der Radnabe (20) die Radbefestigungsbolzen (29) sitzen, Aussparungen für deren Köpfe aufweist.

4. Radlagerung gemäß Anspruch 1, **dadurch gekennzeichnet, daß** mindestens eine der beiden stirnseitigen Hüllflächen (21, 22) der Radnabe (20) Ausnehmungen (26, 27) aufweist.

5. Radlagerung gemäß Anspruch 1, **dadurch gekennzeichnet, daß** die Breite des Wälzlageraußenringes (11) annähernd der Breite des Innenrings oder Innenringverbands (12) entspricht.

## Claims

1. A wheel bearing on a drive axle with a hollow axle housing (1) bearing the wheel loads, fixed axially on the outer ends of which sits at least one anti-friction bearing (10) which supports a wheel hub (20) with at least one brake disk or drum, on which is mounted a drive shall flange (31) on a drive shaft (30) which protrudes from the outer end of the hollow axle housing (1),
**characterised in that**
- in the near vicinity of the anti-friction bearing (10) the wheel hub (20) corresponds approximately to the width of the outer race (11) of the anti-friction bearing, and
- on the outside of the wheel hub (20) a flat enveloping surface (32) of a drive shaft flange (31) and on the inside of the wheel hub (20) a flat enveloping surface (41) of a flange (40) lie at least non-positively adjacent to the brake disk or drum, with both enveloping surfaces (32, 41) projecting radially into the areas of the outer race (11) of the anti-friction bearing where they serve as axial stop faces for the corresponding outer race (11).

2. A wheel bearing in accordance with claim 1,
**characterised in that**
the heads of the wheel fastening bolts (29) lie on the flat inner enveloping surface (21) of the wheel hub (20).

3. A wheel bearing in accordance with claim 1,
**characterised in that**
the flange (40) on the brake disk or drum has recesses for the heads of the wheel fastening bolts (29) at the points at which they sit in the wheel hub (20).

4. A wheel bearing in accordance with claim 1,
**characterised in that**
at least one of the two end enveloping surfaces (21, 22) of the wheel hub (20) has recesses (26, 27).

5. A wheel bearing in accordance with claim 1,
**characterised in that**
the width of the outer race (11) of the anti-friction bearing corresponds approximately to the width of the inner race or the brace of the inner race (12).

## Revendications

1. Palier de roue d'un essieu moteur avec un corps d'essieu (1) creux qui encaisse les charges des roues, comprenant au moins un palier à roulements (10) axialement fixé sur ses extrémités extérieures respectives et qui porte un moyeu de roue (20) avec au moins un disque ou un tambour de frein et sur lequel est bridée unc bride d'arbre moteur (31) d'un arbre moteur (30) sortant hors de l'extrémité extéricure respective du corps d'essieu creux (1),
**caractérisé en ce que** :
- le moyeu de roue (20) dans l'environnement proche du palier à roulements (10) correspond approximativement à la largeur de la baguc extérieure du palier à roulements (11), et
- sur la face extérieure du moyeu de roue (20) s'applique la bride (31) de l'arbre moteur, et sur la face intérieure du moyeu de roue (20) s'applique une bride (40) du disque ou du tambour de frein, au moins en coopération de forces et par une surface enveloppe plane respective (32, 41), et les deux surfaces enveloppe (32, 41) pénétrant en direction radialc dans la région de la bague extérieure du palier à roulements (11) et servant dans cette région de surfaces de butée axiales pour la bague extérieure correspondante (11).

2. Palier de roue selon la revendication 1, **caractérisé en ce que** les tètes des boulons de fixation (29) des roues s'appliquent sur la surface enveloppe intéricurc plane (21) du moyeu de roue (20).

3. Palier de roue selon la revendication 1, **caractérisé en ce que** la bride (40) du disque ou du tambour de frein présente, aux emplacements auxquels reposent les boulons de fixation (29) de roue dans le moyeu de roue (20), des évidements pour leurs têtes.

4. Palier de roue selon la revendication 1, **caractérisé en ce que** l'une au moins des deux surfaces enveloppe frontales (21, 22) du moyeu de roue (20) comporte des évidements (26, 27).

5. Palier de roue selon la revendication 1, **caractérisé en ce que** la largeur de la bague extéricure (11) du palier à roulements correspond approximativement à la largeur de la bague intérieure de l'ensemble de bague intérieure (12).
